# EUROPEAN PATENT APPLICATION

(11) **EP 1 560 341 A1**
(43) Date of publication of application: **03.08.2005**
(21) Application number: 05100502.3
(22) Date of filing: 26.01.2005
(51) Int. Cl.: H04B 1/16

(54) **A mobile station for a radio communication system and method of operation therefor**

(30) Priority: 28.01.2004 GB 0403119
(71) Applicant: Motorola Inc., Schaumburg, IL 60196 (US)
(72) Inventor: Ohev-Zion, Eitan Motorola Israel Limited, 67899 Tel Aviv (IL); Malka, Haim Motorola Israel Limited, 67899 Tel Aviv (IL); Ofir, Gabi Motorola Israel Limited, 67899 Tel Aviv (IL)
(74) Representative: McCormack, Derek James

(57) **Abstract**

A mobile station (103) for use in a radio communication system (100) comprises a receiver (203) which in idle mode monitors for idle mode messages, such as broadcast messages, transmitted from a base station (101) in a cellular communication system. The mobile station (103) has no information of when idle mode messages specifically addressed to the mobile station unit (103) will be transmitted within the idle mode message channel, which may be a system control channel. The receiver (203) is conveniently coupled to a redundancy characteristic processor (205) which determines a redundancy characteristic associated with a downlink idle mode message operation. The redundancy characteristic may for example be an indication of a number of times a given idle mode message is repeated by the base station (101). The mobile station (103) may further comprises an idle mode controller (207) which is operable to switch between a plurality of idle operation modes in response to the redundancy characteristic. The idle operation modes include a reduced operation idle mode which preferably includes powering down the receiver (203) when repeat or extraneous idle mode messages may be transmitted.

## Description

### Field of the invention

The invention relates to a mobile station (herein also referred to as a 'remote unit') for a radio communication system and a method of operation therefor and in particular, but not exclusively, to a mobile station for use in a TETRA (TErrestrial Trunked RAdio) communication system operating in either a trunked mode or a direct mode.

### Background of the Invention

In a cellular communication system a geographical region is divided into a number of cells each of which is served by base station. The base stations are interconnected by a fixed network which can communicate data between the base stations. A remote unit is served via a radio communication link by the base station of the cell within which the remote unit is situated.

As a remote unit moves, it may move from the coverage of one base station to the coverage of another, i.e. from one cell to another. As the remote unit moves towards a new base station, it enters a region of overlapping coverage of two base stations and within this overlap region it changes to be supported by the new base station. As the remote unit moves further into the new cell, it continues to be supported by the new base station. This is known as a handover or handoff of a remote unit between cells.

Communication from a remote unit to a base station is known as uplink, and communication from a base station to a remote unit is known as downlink.

The fixed network interconnecting the base stations is operable to route data between any two base stations, thereby enabling a remote unit in a cell to communicate with a mobile station in any other cell. In addition, the fixed network may comprise gateway functions for interconnecting to external networks such as the Public Switched Telephone Network (PSTN), thereby allowing remote units to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Examples of cellular communication systems include both public cellular communication system such as the Global System for Mobile communication (GSM) and Professional Radio (PMR) systems such as TETRA (TErrestrial Trunked RAdio) which is a system operating in accordance with the industry standards defined by ETSI (European Telecommunications Standards Institute).

Specifically, although a TETRA system may be used as a public cellular communication system, it is designed to provide a number of features and services which are particularly suitable for private organisations or groups such as for example the emergency services.

For example TETRA provides a number of features and services for managing and controlling group calls as well as for managing the membership of these groups. Thus, TETRA provides services for making group calls wherein e.g. a voice message is quickly and efficiently relayed to a specific group of remote units. TETRA furthermore provides features for managing the membership of different groups, priorities of different groups etc.

TETRA provides for both acknowledged and non-acknowledged communication. For acknowledged services, the call setup comprises the call originator receiving an acknowledgement indicating that the destination(s) has been reached. However, for non-acknowledged services, no acknowledgement is received from the destination. Hence, non-acknowledged services do not guarantee that call setup is successful but has the advantage of providing for a very fast call setup. This is particularly useful for many push-to-talk group calls.

Other features and services provided by TETRA include a high level of security which may be optimised for specific purposes, push-to-talk channel allocation, broadcast calls etc.

In addition to trunked mode operation wherein remote units communicate via a base station, TETRA provides for the possibility of communication which is communicated directly between remote units. In one aspect this may allow a remote unit to act as a repeater for another remote unit. For example a vehicle mounted unit may act as a repeater for a portable unit thereby improving coverage for the portable unit.

Furthermore, TETRA supports direct communication between different remote units without the involvement of a base station. This is known as Direct Mode Operation (DMO) and allows remote units to set up and maintain direct communication between these. Accordingly, in TETRA, communication may be supported even in areas which are not covered by a base station.

TETRA is a Time Division Multiple Access (TDMA) system wherein 25 kHz wide channels are further divided into four time slots which may be individually assignable. Each time slot has a duration of 14.167 msecs and four timeslots are combined into a time frame having a duration of 56.67 msecs. Each of the four time slots in a time frame may be individually allocated to the same or different remote units. Furthermore, the time frames are combined into multiframes comprising 18 time frames. Frame number 18 is reserved as a control frame wherein control information may be communicated during an active call.

A very important and critical parameter for remote units in cellular communication systems is the battery life of the remote units. It is desirable to reduce the power consumption of the remote unit in order to increase the operational time before batteries need to be recharged or replaced.

Mobile stations operating in a discontinuous receive mode are known, e.g. as from US-A-5,551,078. This mode allows the receiver to be switched on and off periodically. However, as noted in this reference, mobile stations using a standby or idle mode achieve this by remaining in a continuous receive mode.

Some communication systems employ advanced power saving schemes to reduce the power consumption and thereby increase battery life. This has led to a battery life of possibly more than a hundred hours when the remote unit is in idle mode.

One of the operations performed by remote units when in idle mode is to monitor for messages from the system and specifically from the base station to which the remote unit is attached. These messages may include system information messages e.g. required for support of mobility in the cellular communication system, paging messages which indicate that there is an incoming call to the remote unit or any other request from the system which affect the remote unit state as an individual or a member of a group.

Monitoring for messages requires at least that the remote unit's receiver is powered up. This results in a significant power consumption which drains the battery. Furthermore, as the remote unit generally does not have information of when messages are transmitted, it needs to monitor all time slots that may comprise a message for the remote unit. For example, as the remote unit does not know when it may be called, it monitors all time slots in which a paging message may possibly be transmitted to the remote unit.

One proposed method for reducing power consumption is based on the base stations informing specific remote units of the transmission times of specific messages which are addressed to those specific remote units. Accordingly, the remote units need only power up the receiver at the specific times when these messages are transmitted.

Thus, for each remote unit, the base station and remote unit may negotiate a specific predefined rule for when messages may be transmitted to that specific remote unit. Accordingly, the idle message channel is divided such that idle mode messages for a specific remote unit may not occur randomly but only at the times determined by the predefined rule known to both the base station and the remote unit. Different rules are used for different remote units (or different groups of remote units may have different rules) ensuring that messages for different remote units are communicated at different times and that the capacity of the idle mode message channel is fully utilised.

However, although the known scheme may allow a significant power drain reduction, it is inherently complex and requires that both the fixed network (including the base stations) and the remote units operate in accordance with the scheme.

Thus, the known scheme may be undesirable for systems wherein the associated negotiation messaging is impractical. Furthermore, the scheme cannot be applied in existing systems wherein the fixed network does not have the required functionality without this being modified. Such modifications are costly, time consuming and undesirable. For example, TETRA does not comprise functionality for supporting a network driven or supported power reduction scheme and therefore introduction of such a scheme would require modifications to the TETRA Technical Specifications as well as modifications to existing fixed network equipment.

Furthermore, the proposed power reduction scheme is not suitable for group services. For example, if a group call is to be set up in TETRA, a single paging message identifying the required remote units is transmitted. However, as the remote units of the group would have different predefined rules they would monitor the idle mode message channel at different times and a paging message would only be received by a subset of remote units.

Hence, an improved remote unit and method of operation therefor would be advantageous and in particular a remote unit and method allowing reduced power consumption, increased performance and/or reduced complexity would be advantageous. Specifically, it would be advantageous if reduced power consumption for a remote unit in idle mode could be achieved without requiring modifications to a fixed network of the cellular communication system and/or which would be suitable for group calls.

### Summary of the Invention

Accordingly, the Invention seeks to preferably mitigate, alleviate or eliminate one or more of the above mentioned disadvantages singly or in any combination.

According to a first aspect of the invention there is provided a mobile station in accordance with claim 1.

Such a mobile station for use in a cellular radio communication system may advantageously be a remote unit comprising: a receiver for receiving messages from a base station and operable to monitor for idle mode messages in a shared idle mode message channel when the remote unit is in idle mode, the transmission time of idle mode messages addressed to the remote unit not being known by the remote unit; means for determining a redundancy characteristic associated with a downlink idle mode message operation; and means for switching between a plurality of idle operation modes in response to the redundancy characteristic; at least one of the idle operation modes being a reduced operation idle mode.

The Inventors of the current Invention have realised that reduced power consumption of a remote unit in idle mode may be achieved by exploiting the redundancy associated with idle mode messages transmitted in an idle mode message channel.

The radio communication system in which the emote unit is used may for example be a private mobile radio communication system such as TETRA. The base station may for example be a base station transmitting idle mode messages such as paging or broadcast messages in an idle mode message channel such as a paging channel. The idle mode message channel may be time multiplexed with other channels and the remote unit may for example have knowledge of when the idle mode message channel is active and discrete time instants at which idle mode messages may be transmitted. However, an idle mode message for any remote unit may be transmitted at these time instants and the remote unit has no knowledge of when an idle mode message in the idle mode message channel is addressed to that specific remote unit rather than to other remote units. Hence, the remote unit has no selective information of transmission times relating to idle mode messages for the specific remote unit. Thus, any transmission time information is limited to general non remote unit specific times associated with the idle mode message channel in general. Accordingly, the remote unit has no transmit time information specific to that remote unit.

The Invention allows that a remote unit determines a redundancy characteristic and selects an idle mode operation in response to this. Thus, the idle mode operation may be optimised for the current redundancy characteristic thereby allowing a reduced operation idle mode. The redundancy characteristic may typically relate to a characteristic which is directly or indirectly associated with an operation, functionality or parameter that exceeds the minimum which is required under ideal theoretical conditions. For example, the redundancy characteristic may relate to operations or functionality of the remote unit or base stations which may improve performance and reliability of a practical system but would not be strictly necessary in ideal conditions.

The reduced operation idle mode typically corresponds to an idle operation mode which has reduced functionality with respect to other operational modes. The reduced functionality may be in terms of operations or functionality being performed in reduced time intervals or may e.g. be in the form of certain operations or functionality not being performed; only being partly performed or not being supported. Specifically, the reduced idle mode may correspond to an idle mode operation wherein the idle mode message channel is only monitored for a fraction of the time.

The optimisation of the idle mode operation mode with respect to the redundancy characteristic may specifically be used to reduce the power drain on the batteries and may substantially increase battery life. For example, the redundancy characteristic may indicate that there is sufficient redundancy of the idle mode messages for a lost or not received message to not result in unacceptable performance and specifically the redundancy may be such that a lost message may be adequately compensated for by the possibility of receiving other idle mode messages. For example, if all critical information of an idle mode message is already available, an idle mode message may be ignored. Specifically, if an idle mode message is transmitted more than once, the reduced idle mode may simply reduced the idle mode message channel monitoring interval to ensure that one message is received with an acceptable probability but without providing for all messages to be received. Specifically, the receiver may be shut down during part of the time and the idle mode message channel may thus be monitored only for a suitable fraction of the total time.

The reduced idle mode operation may be entered into whenever the redundancy characteristic indicates that this is feasible, practical and/or advantageous. The redundancy characteristic may e.g. be determined based on information available in the remote unit and/or received via standard idle mode messages (such as standard system information messages) transmitted in accordance with the standards of the specific communication system. Hence, the determination of the redundancy characteristic facilitates or enables the implementation of a reduced idle mode operation without requiring any modifications or changes to base stations, the fixed network or even the technical specifications for the system.

Hence, the invention allows reduced power consumption, improved idle mode performance, increased battery life and reduced complexity of the remote unit and the cellular communication system as a whole.

The different idle operation modes may correspond to different settings of operational parameters for the idle mode operation. For example, a duty cycle between active time intervals and power down time intervals may be adjusted in response to the redundancy characteristic. A modification of the duty cycle may correspond to switching to a different idle mode operation mode.

A remote unit is typically considered to be in idle mode (also known as 'standby mode') if it is switched on but not actively involved in a transmission of user information between communicating radio station, e.g. it is not actively involved in a call.

The invention may allow a combination of different idle operation modes to co-exist. For example different reduced idle modes may be combined to suit different operational characteristics. For example, a reduced idle mode exploiting the redundancy characteristic may be combined with a conventional reduced idle mode operation. Specifically in e.g. a TETRA communication system a conventional energy saving mode for acknowledged services may be combined with energy saving modes suitable for unacknowledged services such as group calls.

According to a feature of the invention, a downlink idle mode message operation is an operation of a base station of a fixed network of cellular radio communication system.

The determined redundancy characteristic preferably relates to the downlink operation of a base station. Specifically the redundancy characteristic may relate to the redundancy of the downlink transmitted idle mode messages and may specifically relate to the number of times a base station retransmits one or more idle mode messages. This may permit the idle mode operation to be optimised for the specific redundancy employed by the base station. For example, the idle mode operation may be arranged such that a given probability of receiving an idle mode message is achieved for the current base station redundancy operation. The redundancy characteristic may directly relate to the idle mode messages themselves or may relate to indirect parameters that will affect the transmission or reception of idle mode messages such as for example a system configuration or characteristic.

According to a different feature of the invention, the downlink idle mode message operation is a downlink idle mode message operation of the remote unit.

The redundancy characteristic may relate to the downlink operation of the remote unit itself, such as for example to characteristics that affect the remote unit's requirement or reliance on the redundancy of the transmission of idle mode messages. For example, the probability of receiving a given idle mode message may depend on a current interference level and therefore the remote unit may be more dependent on the redundancy of the transmission of idle mode messages at higher interference levels than at lower interference levels.

Preferably the redundancy characteristic may relate to both the downlink operation of a base station and of the remote unit thereby allowing the idle mode performance to be optimised taking the conditions of both the remote unit and the base station into account.

According to a different feature of the invention, the remote unit comprises means for powering down the receiver for time intervals during the reduced operation idle mode. This provides for a particularly advantageous reduced idle mode which may result in a significantly reduced power consumption and thus increased battery life. The duration of the power down time intervals and the active time intervals may be adjusted to suit the current redundancy characteristics.

According to a different feature of the invention, the redundancy operation characteristic is associated with a repetition characteristic of at least one downlink idle mode message. In cellular communication systems, idle mode messages are typically retransmitted a number of times. The number of retransmissions may depend on a number of parameters and may vary with time. Preferably, the redundancy characteristic comprises at least one parameter that allows the subscriber unit to determine a number of retransmissions of at least one idle mode message. The at least one parameter may directly indicate the number of retransmissions and/or may allow an indirect determination of the number of retransmissions.

The feature may allow an efficient and low complexity idle mode operation having reduced power drain. For example, if conditions are sufficient to ensure that an idle mode message is received with sufficiently high probability, the remote unit may enter a reduced idle mode message wherein the receiver is only active for a time interval sufficient to ensure that one of the retransmissions falls within this time interval. Thus a number of retransmissions (or repetitions) of the idle mode message may be ignored by the remote unit.

According to a different feature of the invention, the cellular radio communication system employs a Time Division Multiple Access (TDMA) scheme, and the means for powering down is operable to power the receiver down in time intervals determined in response to the redundancy characteristic. This provides a particularly low complexity method of reduced idle mode operation. The time intervals may specifically be individual slots or time frames.

According to a different feature of the invention, the repetition characteristic indicates a number of transmitted repetitions of the at least one idle mode message; and the means for powering down is operable to power the receiver down such that the receiver will be able to receive at least one but not all of the number of transmitted repetitions of the at least one idle mode message.

The reduced idle mode operation may preferably be such that it does not seek to receive all repetitions of an idle mode message but only to receive a subset of these. Specifically, the reduced idle mode operation may be just sufficient for the probability of receiving one of the repetitions of the idle mode messages is above a given threshold. In the simplest form, the means for powering down may power down the receiver except for a time interval sufficient to comprise only one repetition of the idle mode message.

According to a different feature of the invention, the means for determining the redundancy characteristic is operable to determine the redundancy characteristic in response to a radio quality indication.

This may allow the idle mode operation to be optimised for the current radio conditions. For example, if radio conditions are poor, the probability of receiving a given transmission of an idle mode message is reduced and therefore the redundancy of idle mode messages may be required to reach a desired level of reliability. However, if the radio quality indication indicates that the radio quality is high, no reliance on the redundancy may be required and the receiver may be powered down except for a short time interval sufficiently large to receive a single message. However, if the radio quality indication indicates that the radio quality is low, this time interval may be extended to encompass the possibility of receiving two or more idle mode messages. Thus, the trade off between idle mode performance and/or reliability and the power drain of the remote unit may be adjusted to suit the current conditions.

The radio quality indication may for example be a radio signal strength indication or an error rate.

According to a different feature of the invention, the means for determining the redundancy characteristic is operable to determine the redundancy characteristic in response to a system loading.

The system loading may e.g. relate to a specific group of radio channels, a base station or the system as a whole. In communication systems such as TETRA, the number of retransmissions of idle mode messages may vary dependent on the system loading. Thus, modifying the idle mode operation in response to the system loading allows an optimisation for the current conditions.

According to a different feature of the invention, the means for determining the redundancy characteristic is operable to determine the redundancy characteristic in response to a characteristic of a service to be supported.

The service may for example relate to whether e.g. a data call, a voice call, a private call or a group call is to be supported. In communication systems such as TETRA, the number of retransmissions of idle mode messages may vary for different services. Thus, modifying the idle mode operation in response to the characteristic of a service allows an optimisation for the current conditions. Specifically, the redundancy characteristic may relate to whether a group call or a private call is supported or expected. Alternatively or additionally, the redundancy characteristic may relate to whether an acknowledged call or a non-acknowledged call is supported or expected. For an acknowledged call, successful reception of an idle mode message will directly or indirectly result in an acknowledgement being communicated to the originator thereby allowing the originator or the system to detect if the idle mode message has not been received.

According to a different feature of the invention, the idle mode message operation is a group idle mode message operation.

The invention may be particularly advantageous for improving idle mode operation (such as the power drain associated therewith) while supporting idle mode messages directed to a group of remote units rather than just a single remote unit.

According to a different feature of the invention, the remote unit comprises means for, when in the reduced idle operation mode, initiating reception of an idle mode message; determining if the idle mode message comprises new information and for terminating reception before receiving the end of the idle mode message if the idle mode message does not comprise new information.

The remote unit may not need to receive a complete idle mode message to determine whether the idle mode message comprises information that is not already available at the remote unit. For example, the idle mode message may comprise an identification at the beginning of the message, and the receiver may terminate reception as soon as this identification has been demodulated and found to correspond to an idle mode message already received. As another example, the base station may in some cases transmit dummy bursts which do not comprise any information. These may quickly be identified and the receiver powered down before the entire message is received. This may allow reduced power consumption.

New information is typically information which is currently not available or derivable by the remote unit without further messages being received from the fixed network.

According to a different feature of the invention, the remote unit comprises means for, when in the reduced idle operation mode; initiating reception of an idle mode messages; determining if the idle mode message comprises new information and for terminating reception before receiving the end of the idle mode message if the idle mode message does not comprise critical information.

Critical information is typically information which is required for correct or at least acceptable operation. The information which may be considered critical depends on the specific application and conditions and may vary. For example, the remote unit may comprise a list of information which is considered critical and which is considered not to be critical.

Thus, the reduced idle mode operation mode may allow a reduction of power drain by terminating the reception for idle mode messages which are not considered to comprise critical information.

According to a different feature of the invention, the remote unit comprises means for, when in the reduced idle operation mode; receiving access control information in a time interval and means for controlling the receiver to monitor for idle mode messages in response to the access control information.

The access control information may typically be determined by receiving in a much shorter window than required for idle mode messages. For example, in TETRA the Access Assignment CHannel (AACH) may be monitored and information derived that may be used to modify the performance of the receiver in the reduced idle operation mode. For example, the AACH may comprise information related to the system configuration that allows power down intervals to be adjusted to suit the current conditions.

Preferably, the remote unit is a TETRA remote unit operable to operate in accordance with the TETRA technical specifications.

According to a second aspect of the invention, there is provided a method of operation for a remote unit in a cellular radio communication system comprising a receiver for receiving messages from a central station and operable to monitor for idle mode messages when the remote unit is in idle mode, the transmission time of idle mode messages addressed to the remote unit not being known by the remote unit; the method comprising the steps of: determining a redundancy characteristic associated with a downlink idle mode message operation; and switching between a plurality of idle operation modes in response to the redundancy characteristic; at least one of the idle operation modes being a reduced operation idle mode.

These and other aspects, features and advantages of the invention will be apparent from and elucidated with reference to the embodiment(s) described hereinafter.

### Brief Description of the Drawings

An embodiment of the invention will be described, by way of example only, with reference to the accompanying drawings, in which
FIG. 1 is a schematic diagram illustrating a segment of a TETRA communication system; and
FIG. 2 is a simplified block diagram of a mobile station or remote unit in accordance with an embodiment of the invention.

### Description of Embodiments of the Invention

The following description focuses on an embodiment of the invention applicable to a TETRA radio communication system, but it will be appreciated that the invention is not limited to this application, and may be applied to many other cellular radio communication systems.

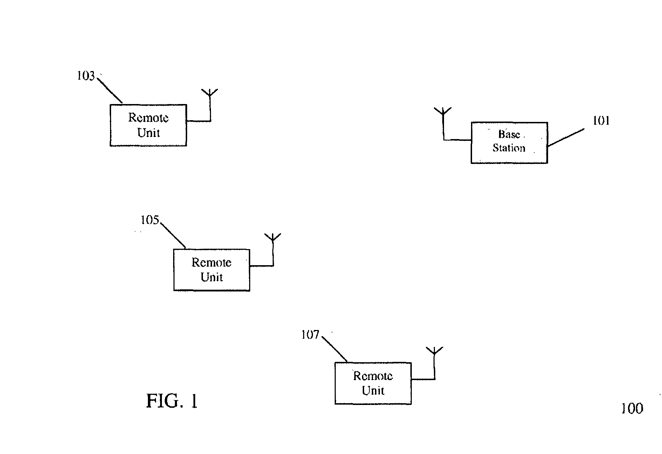

FIG. 1 illustrates a segment of a TETRA communication system 100. FIG. 1 illustrates a single base station 101 and three remote units 103, 105, 107. Each of the remote units 103, 105, 107 may be a subscriber unit, a wireless user equipment, a mobile station, a communication terminal, a personal digital assistant, a laptop computer, an embedded communication processor or any communication element communicating over the air interface.

In the example of FIG. 1 all remote units 103, 105, 107 are in idle mode wherein they are registered on the base station 101 but not involved in any active calls.

In accordance with the TETRA Technical Specifications, the base station 101 transmits and broadcasts a number of idle mode messages supporting remote units in idle mode as is well known to the person skilled in the art.

Specifically, the base station 101 transmits a Main Control CHannel (MCCH) which contains messages broadcast to remote units in general. Information transmitted on the MCCH comprises for example synchronisation information, network configuration information, neighbour cell information etc.

In addition to broadcast information, the base station 101 may also transmit idle mode messages to a specific remote unit or group of remote units. Specifically, the base station 101 may transmit paging messages to a specific remote unit or group of remote units in order to initiate a call to the remote unit or group of remote units. The paging messages are transmitted on the MCCH or any other control channel such as the SCCH.

In the following an embodiment of the invention will be described with specific reference to the operation of idle mode remote units in order to monitor and receive paging idle mode messages. However, it will be appreciated that the invention is not limited to this specific embodiment but may be applied to other idle mode messages than paging messages and other idle mode channels than the paging channel.

In TETRA, the base station 101 may transmit the paging messages more than once. The redundancy introduced by this repetition of the paging messages is needed for extreme situations when a remote unit is at the edge of the coverage area of the base station so that successful reception of the paging message is uncertain. To alleviate the impact of this reduced performance, the base station retransmits the same message thereby increasing the probability that one of the paging messages is received by the remote unit.

The inventors of the current invention have realised that such redundancy operation may be exploited by remote units to e.g. reduce the power consumption in idle mode operation.

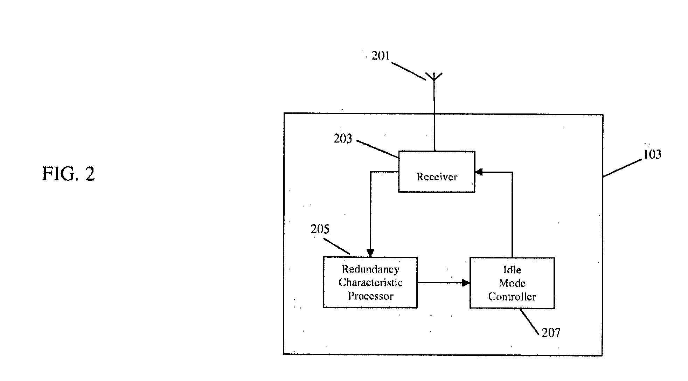

FIG. 2 illustrates a simplified block diagram of a remote unit 103 in accordance with an embodiment of the invention. For clarity and brevity, only the features of the remote unit 103 required for the description of the embodiment are shown in FIG. 2. It will be appreciated that the remote unit further comprises additional functionality for operating in accordance with the TETRA Technical Specifications as will be known to the person skilled in the art.

The remote unit 103 of FIG. 2 specifically reduces the power consumption during idle mode by exploiting the redundancy introduced by the repeated transmission of paging messages as described in the following.

The remote unit 103 comprises an antenna 201 which is coupled to a receiver 203. The receiver 203 is operable to monitor for and receive idle mode messages transmitted by the base station 101.

In accordance with the TETRA Technical Specifications, the paging messages may be transmitted at any time. However, any paging message addressed to any remote unit may be transmitted at any such time. Thus, although the remote unit may be synchronised to the base station 101 and may have information as to when paging messages in general may possibly be transmitted, the remote unit has no information of when a paging message addressed to that specific remote unit may be transmitted. Thus, the transmission time of paging messages addressed to the specific remote unit 103 is not known by the remote unit 103. Accordingly, the conventional TETRA idle mode operation is for the remote unit 103 to monitor for paging messages in all time frames resulting in a relatively high power consumption and low battery life.

However, in the described embodiment, the receiver 203 of the remote unit 103 is coupled to a redundancy characteristic processor 205 which is operable to determine a redundancy characteristic associated with the downlink paging message operation.

In the described embodiment, the redundancy characteristic includes a parameter indicating how many retransmissions of a paging message can be expected.

The number of retransmissions of paging messages from the base station may depend on a number of factors including the system configuration, the system loading and the service associated with the paging message.

For example, a group call is a dispatch call which is characterized by a plurality of remote units receiving and one remote unit transmitting at a time. The group call initiation process proceeds independently of the actual availability of the recipient remote units and does not comprise any acknowledgement being transmitted to the call originator. Accordingly, the group call attempts to reach all remote units of the group without any knowledge of their state, operating conditions and without receiving any confirmation. In order to ensure a high degree of success the base stations accordingly use a high degree of redundancy and re-transmit the group call paging message four times in consecutive time frames.

In contrast, a private call is a person to person call (P2P) which requires end-to-end availability and the call setup procedure specifically comprises a Level 3 acknowledgement ensuring that failed attempts to reach a remote unit will be detected. Accordingly, private calls paging messages are transmitted with less redundancy and specifically two repetitions of the paging message are transmitted in consecutive time frames.

The redundancy characteristic processor 205 is coupled to an idle mode controller 207 which controls the idle mode operation of the remote unit 103. The idle mode controller 207 is coupled to the receiver 203 and is operable to power down the receiver 203 thereby reducing the power consumption.

The redundancy characteristic processor 205 feeds the determined redundancy characteristic to the idle mode controller 207. Specifically, the redundancy characteristic processor 205 informs the idle mode controller 207 of how many repetitions of the paging message will be transmitted by the base station 103 when paging the remote unit 103.

The idle mode controller 207 is operable to switch between a plurality of idle operation modes in response to the redundancy characteristic. The different idle operation modes may differ substantially or may vary only in the value of some parameters used. Thus, the switching between different idle operation modes may in some cases be equivalent to modifying a given idle operation mode for example by modifying one or more parameters of the operation.

In a very simple embodiment, the idle mode controller 207 assumes that the radio conditions are sufficiently good to ensure that all paging messages transmitted by the base station are received successfully. Accordingly, the idle mode controller 207 powers down the receiver such that it is only active for a time interval sufficient to ensure that at least one of the repetitions of the paging message falls within this window.

For example, assuming that the redundancy characteristic processor 205 has determined that a paging message for the service(s) that is supported will be repeated in four consecutive time frames, the idle mode controller 207 may power down the receiver in three time frames and activating the receiver only for every fourth time frame. If the redundancy characteristic processor 205 determines that the paging message will only be repeated in two consecutive time frames, the idle mode controller 207 may switch to an idle mode operation wherein the receiver is active in every other time frame and powered down for only one time frame at a time. In accordance with this example, a remote unit may operate in a reduced idle operation mode wherein the power consumption of the receiver is halved when supporting both group calls and private calls and which may be further halved if only group calls are to be supported.

It will be appreciated that a TETRA system typically supports many other service types including Telephone InterConnect (TIC) or Short Data Service (SDS) services and that the same principles may be applied to these services.

It will also be appreciated that the redundancy characteristic may additionally or alternatively comprise many other characteristics.

For example, in TETRA, the repetition of paging messages may be set by the network operator and it may therefore vary between different systems. Furthermore, the number of repetitions for various paging messages may also be different for different system manufacturers or vendors. In some embodiments, the redundancy characteristic may therefore comprise a direct or indirect identification of the network operator or the system manufacturer, and the remote unit may be operable to modify the idle mode operation in response thereto.

As another example, the redundancy characteristic may comprise information relating to a current system configuration. The system configuration of the whole or part of the TETRA communication system may be changed and information related to the change in configuration may be derivable from the messages transmitted by the base stations. Specifically, the remote unit may monitor the MCCH (or any other suitable control channel) and therefrom derive information indicative of the current system configuration and the redundancy performance.

Another parameter which has been found to be of substantial impact on the number of retransmissions in a TETRA system is the system loading. The Inventors of the present invention have performed experiments revealing that the number and distributions of retransmissions of paging messages typically vary substantially with the loading of the system as a whole or with the specific base station transmitting the paging message.

Accordingly, the remote unit may advantageously seek to determine the system load and to modify the idle operation mode performance accordingly. In some systems, the current system load of e.g. the base station may be broadcast and the remote unit may simply use this information. In other systems, only indirect information is transmitted by the base station and accordingly the remote unit comprises information for determining a suitable system load measure. This determination may be based on messages transmitted on the MCCH (or any other suitable control channel). For example, the MCCH transmits random parameters in sysinfo broadcasts, system load parameters of network broadcasts from adjacent cells, random access intervals of AACH etc.

It will be appreciated that the specific modification of idle mode operation may depend on details of the individual embodiment and the system in which it is used. Thus, the paging message performance of a specific system may be characterized by measurements and the results included in the remote unit, for example by a look up table linking a given system load with suitable operating parameters of the idle operation mode.

Hence, in accordance with the embodiment, the remote unit determines a redundancy characteristic or performance from information which is transmitted from the base station and adjusts the idle mode performance to suit this redundancy performance. Specifically, the remote unit may intentionally drop some of the repeated paging messages in order to power down the receiver and thereby reduce power consumption and increase battery life. Furthermore, the remote unit may dynamically modify the idle mode performance to suit the current performance thereby increasing the power reduction performance while ensuring that a given level of performance and reliability is achieved.

Furthermore, the idle mode performance may not only be modified in response to the redundancy performance of the base station but may also be modified in response to the redundancy performance of the remote unit, and in particular in response to the remote units reliance on the redundancy of the idle mode messages to achieve a desired performance level. Thus, the redundancy characteristic may comprise information related to the remote unit's redundancy performance and the conditions affecting this performance. Specifically, the idle mode operation of the remote unit may be modified in response to the probability of receiving each repetition of the paging messages such that the higher the probability of successful reception is, the lower is the number of repetitions of the paging message that the remote unit attempts to receive.

As a specific example, the probability of the remote unit receiving a specific paging message depends on the current radio conditions in which the remote unit operates. Thus, a remote unit on the edge of a coverage area may have a low reliability of receiving any given paging message whereas a remote unit close to the base station has a very high probability of receiving all paging messages without error. In accordance with the described embodiment, the remote unit comprises means for receiving and/or individually determining a radio quality indication which relates to the current propagation environment and thus the probability of the paging messages being received.

In a simple embodiment, the remote unit simply performs a radio signal strength measurement of the broadcast signal from the base station. The higher the signal strength, the higher the probability of successful reception. In a slightly more complex embodiment, the remote unit may determine e.g. a channel bit error rate and adjust the idle mode operation in response to this. The remote unit may for example also use received messages to determine a radio quality indication. For example, the received messages may be used to determine an estimated load for the base station. Typically, the interference will depend on the load and accordingly the probability of successful reception increases with decreasing system load.

In the described embodiment, the idle mode operation is modified in response to the radio quality indication. In a simple implementation, conventional TETRA idle mode operation is selected whenever the radio quality indication is below a predetermined quality threshold. Thus, for critical conditions, the same performance as a conventional TETRA remote unit is achieved. However, if the radio quality indication is above the predetermined quality threshold, the remote unit switches to a reduced idle mode operation wherein only a subset of time frames are monitored for paging messages. This ensures that a significant power reduction may be achieved without sacrificing performance in critical conditions.

In more advanced embodiments, a more complicated selection of idle operation modes in response to the radio quality indication may be employed.

The above description has focussed on an embodiment wherein one or more reduced idle modes comprise powering down the receiver during time intervals where redundant repetitions of idle mode messages may be transmitted. However, it will be appreciated that other reduced idle operation modes may additionally or alternatively be applied.

For example, the remote unit may in at least one reduced idle operation mode comprise powering down the receiver during receipt of an idle mode message when it is determined that the message does not comprise new and/or critical information.

In this embodiment, the remote unit is operable to start receiving an idle mode message. The message is demodulated and decoded before the message has been completely received and the remote unit determines if the messages is considered to comprise information which is relevant. If the information is relevant the complete message is received and processed. Otherwise the receiver is powered down and the remaining part of the message is ignored thereby reducing power consumption.

The remote unit may use any suitable method for determining if the idle mode message comprises relevant information. For example, the idle mode message may comprise an identification which may be compared to identifications of idle mode messages already received. If a match is found, it is considered that the idle mode message has already been received and the receiver is powered down. Alternatively or additionally, the remote terminal may be able to determine a type of the idle mode messages and therefrom determine if the information in the idle mode message is considered new or critical. For example, the base station may occasionally transmit dummy bursts which may be quickly identified as such by the remote unit resulting in the receiver being powered down.

As another example of a reduced idle mode operation, the remote unit may receive access control information in a time interval. For example, the remote unit may monitor the Access Assignment CHannel (AACH) of a TETRA system. The AACH comprises information which may be used to control the idle mode operation of the receiver. For example, the AACH may comprise information that allows the remote unit to determine system information (for example the number of access assignments may be an indication of the system load).

It will be appreciated that the described embodiments provide a number of advantages over the prior art including:
- Remote units may substantially increase the battery life without sacrificing performance.
- Idle mode operation may be optimised for the current operation conditions.
- Idle mode operation may be optimised without requiring any modifications to or involvement by the fixed network.
- Reduced idle mode operation compatible with and suitable for group call operation is enabled or facilitated.
- Idle mode operation may be performed individually by a single remote unit based only on parameters and characteristics locally available to the remote unit.

The invention can be implemented in any suitable form including hardware, software, firmware or any combination of these. However, preferably, the invention is implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

In the mobile stations embodying the invention, there may be a user interface including means for entry of a signal by a user. This may comprise a keyboard or button(s) operating in a known manner in conjunction with a visual display which indicates user options. The user may via the interface enter a signal to indicate selection by a user of an idle mode operation in which the receiver is put in a reduced activity state for selected periods of the idle mode. The user may be prompted to make this selection following indication of a particular radio signal strength or quality or low state of battery charge.

Although the present invention has been described in connection with the above embodiments, it is not intended to be limited to the specific form set forth herein. Rather, the scope of the present invention is limited only by the accompanying claims. In the claims, the term 'comprising' does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A mobile station (103) for use in a radio communication system (100) comprising:
a receiver (203) for receiving signals from another radio station;
and a controller (207) operable to switch the receiver between a fully active receiving state and a reduced activity state; and
**characterised in that** the controller is operable to put the receiver in a reduced activity state for selected periods of an idle mode, the selected periods being determined by the controller according to a redundancy characteristic of one or more received data messages.

2. A mobile station according to claim 1 wherein the controller is operable to predict that one or more messages to be received by the mobile station for use by the mobile station during the selected periods are redundant messages sent for system operational purposes.

3. A mobile station according to claim 1 or claim 2 wherein the data messages are of a transmission length which is not known to the mobile station.

4. A mobile station according to claim 1, claim 2 or claim 3 wherein the receiver is operable during periods of the idle mode when the receiver is not in a state of reduced activity to monitor for data messages for use by the mobile station for system operational purposes.

5. A mobile station according to any one preceding claim which is operable to determine a redundancy characteristic associated with a data message sent by another radio station for system operational purposes.

6. A mobile station according to claim 5 wherein the data message is a broadcast message sent by a base station in a cellular communication system.

7. A mobile station according to claim 5 wherein the data message is a message sent by another mobile station capable of communicating with the mobile station in a direct mode.

8. A mobile station as claimed in any one of claims 5 to 7 wherein the redundancy characteristic is associated with a characteristic of repetitive transmission of the data message.

9. A mobile station as claimed in any one of the preceding claims wherein the mobile station includes means for powering down the receiver for the selected periods of the idle mode.

10. A mobile station as claimed in claim 9 which is operable to communicate in the radio communication system using a Time Division Multiple Access (TDMA) timing protocol, and the means for powering down is operable to power the receiver down in time intervals determined by the controller according to the redundancy characteristic.

11. A mobile station as claimed claim 9 or claim 10 wherein the redundancy characteristic is associated with a characteristic of repetitive transmission of the data message and the characteristic indicates a number of transmitted repetitions of the data message and the means for powering down is operable to power the receiver down such that the receiver will be able to receive at least one but not all of the number of transmitted repetitions of the data message.

12. A mobile station as claimed in any one preceding claim wherein the means for determining the redundancy characteristic is operable to determine the redundancy characteristic in response to a radio quality indication determined by the mobile station.

13. A mobile station as claimed in any one preceding claim wherein the means for determining the redundancy characteristic is operable to determine the redundancy characteristic in response to a system loading.

14. A mobile station as claimed in any one preceding claim wherein the means for determining the redundancy characteristic is operable to determine the redundancy characteristic in response to a characteristic of a service to be supported.

15. A mobile station as claimed in any one preceding claim wherein the mobile station is operable to receive in idle mode a group idle mode data message.

16. A mobile station as claimed in any one preceding claim which includes means for initiating, when in the reduced activity state of the idle mode, reception of an idle mode message; determining if the idle mode message comprises new or critical information; and terminating reception before receiving the end of the idle mode message if the idle mode message does not comprise new or critical information.

17. A mobile station as claimed in any one preceding claim wherein the receiver is operable to receive, when in the reduced activity idle operation mode, access control information in a time interval, and means for controlling the receiver to monitor for idle mode messages in response to the access control information.

18. A mobile station as claimed in any one preceding claim wherein the mobile station is operable in accordance with the TETRA standard procedures.

19. A mobile station according to any one preceding claim which includes a user interface including means for entry of a signal by a user to indicate selection by a user of an idle mode operation in which the receiver is put in a reduced activity state for selected periods of the idle mode.

20. A method of operation for a mobile station in a radio communication system comprising:
receiving signals by a receiver of the mobile station from another radio station;
and switching the receiver between a fully active receiving state and a reduced activity state according to whether a signal to be received is desired or not; and
**characterised by** determining by a controller of the mobile station a redundancy characteristic of data messages predicted to be received by the mobile station for use by the mobile station for system operational or control purposes during selected periods when the mobile station is an idle mode and putting the receiver in a reduced activity state for the selected periods.
